## Europäisches Patentamt
## European Patent Office
## Office européen des brevets

(11) Veröffentlichungsnummer: **0 042 942**
A1

# EUROPÄISCHE PATENTANMELDUNG

(21) Anmeldenummer: 81103559.1

(22) Anmeldetag: 09.05.81

(51) Int. Cl.³: **B 61 D 3/16**
B 62 D 53/08, B 60 P 7/10

(30) Priorität: 28.06.80 DE 3024484

(43) Veröffentlichungstag der Anmeldung:
06.01.82 Patentblatt 82/1

(84) Benannte Vertragsstaaten:
AT BE CH FR IT LI

(71) Anmelder: Waggonfabrik Talbot
Jülicher Strasse 213-237
D-5100 Aachen(DE)

(72) Erfinder: Petzoldt, Günther, Dipl.-Ing.
Cranachstrasse 1
D-4950 Minden(DE)

(72) Erfinder: Imgrund, Heinz, Ing.-Grad.
Wildweg 4
D-4952 Porta Westfalica(DE)

(72) Erfinder: Rheindorf, Hans-Peter, Ing.-Grad.
Fahrten Strasse 17
D-5216 Niederkassel 6(DE)

(72) Erfinder: Stiefel, Christian Dr.-Ing.
Moreller Weg 24
D-5100 Aachen(DE)

(72) Erfinder: Sinhoff, Alfred
Kasinostrasse 8
D-5102 Würselen(DE)

(72) Erfinder: Tandetzki, Hans
Bussardstrasse 4
D-5120 Herzogenrath(DE)

(74) Vertreter: Stenger, Alex, Dipl.-Ing. et al,
Patentanwälte Dipl.-Ing. A. Stenger Dipl.-Ing. W.
Watzke, Dipl.-Ing. H.J. Ring Kaiser-Friedrich-Ring 70
D-4000 Düsseldorf 11(DE)

(54) Vorrichtung zur Lagerung des Sattelzapfens von auf Eisenbahnwagen zu transportierenden Sattelaufliegern.

(57) Die Erfindung betrifft eine Vorrichtung zur Lagerung des Sattelzapfens von auf Eisenbahnwagen zu transportierenden Sattelaufliegern mit einer Traverse, die sich mit ihren Enden im Bereich der Seitenlangträger auf dem Eisenbahnwagen abstützt und in ihrer Mitte eine Sattelplatte zur Aufnahme des Sattelzapfens des Sattelaufliegers aufweist. Um hohe Belastungen des Sattelzapfens und Beschränkungen bei der Positionierung des Sattelaufliegers auf dem Eisenbahnwagen zu vermeiden, ist die Traverse (6) an ihren beiden Enden jeweils entkuppelbar und verschwenkbar mit einem Laufwerk (4) verbunden, das in Längsrichtung des Eisenbahnwagens (1) verfahrbar ist. Die beiden Laufwerke (4) sind auf Kopfprofilen (1d) der Seitenwagen (1b) des wannenförmig ausgebildeten und mit einer durchgehenden Ladefläche (1c) für die Räder von Sattelaufliegern und Zugmaschinen versehenen Wagenkastens verfahrbar und besitzen vorzugsweise einen Laufwerkrahmen und Räder (4b), deren Abrollbewegung bei Belastung durch einen auf der Traverse (6) abgestützten Sattelauflieger blockiert ist.

Fig. 4

- 1 -

Vorrichtung zur Lagerung des Sattelzapfens von auf
Eisenbahnwagen zu transportierenden Sattelaufliegern

---

Die Erfindung betrifft eine Vorrichtung zur Lagerung
des Sattelzapfens von auf Eisenbahnwagen zu transportierenden Sattelaufliegern mit einer Traverse, die sich
mit ihren Enden im Bereich der Seitenlangträger auf dem
Eisenbahnwagen abstützt und in ihrer Mitte eine Sattelplatte zur Aufnahme des Sattelzapfens des Sattelaufli e-
gers aufweist.

Während es zur sicheren Abstellung eines Sattelaufli e-
gers auf der Straße ausreicht, den an seinem Vorderteil
vom Sattel der Zugmaschine abgekuppelten Sattelauflieger auf eigene Abstellstützen zu stellen, die hinter
dem Sattelzapfen außerhalb des Zugmaschinenbereiches
unter dem Sattelauflieger angeordnet und von Hand verschwenkbar sowie längenveränderlich sind, müssen für
den Transport des Sattelaufliegers auf Eisenbahnwagen
im sogenannten Huckepackverkehr spezielle Stützböcke
verwendet werden, da die am Sattelauflieger angeordneten Abstellstützen den Sicherheitsanforderungen für den
Transport auf Eisenbahnwagen nicht genügen. Beim Huckepackverkehr sind die Sattelauflieger durch Beschleuni-

- 2 -

gungs- und Verzögerungskräfte, insbesondere beim Rangieren, heftigen Stößen in Fahrzeuglängsrichtung sowie Querbelastungen beim Befahren von Kurven und Weichen ausgesetzt, denen die auf eine rein statische Belastung ausgelegten Abstellstützen des Sattelaufliegers nicht gewachsen sind. Es sind deshalb spezielle Stützböcke entwickelt worden, welche die auf den Eisenbahnwagen zu transportierenden Sattelauflieger an ihrem Sattelzapfen unterstützen. Derartige Stützböcke sind in verschiedenen Ausführungen bekannt.

Die Erfindung geht von einer derartigen Vorrichtung zur Lagerung des Sattelzapfens von auf Eisenbahnwagen zu transportierenden Sattelaufliegern aus, die eine Traverse umfaßt, welche sich mit ihren Enden im Bereich der Seitenlangträger auf dem Eisenbahnwagen abstützt und in ihrer Mitte eine Sattelplatte zur Aufnahme des Sattelzapfens des Sattelaufliegers aufweist. Die portalähnliche Traverse ruht mit ihren Enden unmittelbar auf dem Eisenbahnwagen und wird in der jeweiligen Stellung mit dem Eisenbahnwagen verriegelt. Auch die anderen bekannten Ausführungen von Stützböcken für Sattelauflieger erfordern eine Verriegelung am Eisenbahnwagen.

Durch diese Verriegelung des Stützbockes mit dem Eisenbahnwagen ergeben sich bei heftigen Stößen in Fahrzeuglängsrichtung Belastungen am Sattelzapfen des Sattelaufliegers, die zu Beschädigungen führen können. Außerdem wird durch die Notwendigkeit einer Verriegelung die auf dem Eisenbahnwagen einzunehmende Position sowohl des Stützbockes als auch des Sattelaufliegers vorgeschrieben.

Der Erfindung lag die Aufgabe zugrunde, eine Vorrich-

- 3 -

tung zur Lagerung des Sattelzapfens von auf Eisenbahnwagen zu transportierenden Sattelaufliegern der eingangs beschriebenen Art zu schaffen, die unter Vermeidung der Nachteile der bekannten Konstruktionen sowohl
Beschränkungen hinsichtlich der Positionierung des
Sattelaufliegers auf dem Eisenbahnwagen als auch erhöhte Belastungen des Sattelzapfens der Sattelauflieger vermeidet.

Die Lösung dieser Aufgabenstellung durch die Erfindung
ist dadurch gekennzeichnet, daß die Traverse an ihren
beiden Enden jeweils entkuppelbar und verschwenkbar mit
einem Laufwerk verbunden ist, das in Längsrichtung des
Eisenbahnwagens verfahrbar ist.

Durch die Anordnung der Traverse an in Längsrichtung
des Eisenbahnwagens verfahrbaren Laufwerken läßt sich
die zur Lagerung des Sattelzapfens von Sattelaufliegern
mit einer Sattelplatte versehene Traverse auf einfache
Weise in jede beliebige Stellung auf dem Eisenbahnwagen
überführen, so daß die Anordnung des Sattelaufliegers
auf dem Eisenbahnwagen völlig frei erfolgen kann. Damit
der Sattelauflieger durch eine Zugmaschine ungehindert
von der der späteren Abstützung des Sattelaufliegers
dienenden Traverse auf den Eisenbahnwagen gefahren bzw.
vom Eisenbahnwagen herabgefahren werden kann, ist die
Traverse erfindungsgemäß an ihren beiden Enden entkuppelbar mit dem jeweiligen Laufwerk verbunden. Die Traverse kann somit nach dem Entkuppeln von einem Laufwerk nach der einen oder anderen Seite aus dem Bewegungsbereich des Sattelaufliegers und der Zugmaschine
herausgeschwenkt werden, wobei die Entkupplung vorzugsweise an der Seite erfolgt, an der der Fahrer der Zugmaschine sitzt.

Die erfindungsgemäße Ausbildung ermöglicht somit ein besonders einfaches Abstellen von Sattelaufliegern auf einem Eisenbahnwagen. Hierzu ist es nämlich lediglich erforderlich, die annähernd in die spätere Position auf dem Eisenbahnwagen verfahrene Traverse von einem Laufwerk abzukuppeln und seitlich aus dem Bewegungsbereich des Sattelzuges zu verschwenken, bevor der Sattelauflieger mittels seiner Zugmaschine auf den Eisenbahnwagen gefahren wird. Sobald der Sattelauflieger die gewünschte Position erreicht hat, wird er von der Zugmaschine abgekuppelt und auf seine eigenen Abstellstützen gestellt. Nach dem Wegfahren der Zugmaschine wird die Traverse zurückgeschwenkt, mit dem zweiten Laufwerk verbunden und in Position unterhalb des Sattelzapfens des Sattelaufliegers gebracht. Durch Verkürzen der Abstellstützen des Sattelaufliegers wird dessen Sattelzapfen in die Sattelplatte der Traverse eingeführt. Nach einem weiteren Verkürzen der Abstellstützen, ihrer Verschwenkung in die Ruhelage und der Festlegung des Sattelaufliegers durch Radvorleger ist der Sattelauflieger transportbereit.

Das Abladen des Sattelaufliegers erfolgt auf ebenso einfache Weise in umgekehrter Reihenfolge.

Bei einer bevorzugten Ausführungsform der Erfindung sind die Laufwerke auf Kopfprofilen der Seitenwangen des wannenförmig ausgebildeten und mit einer durchgehenden Ladefläche für die Räder von Sattelaufliegern und Zugmaschinen versehenen Wagenkastens verfahrbar. Hierdurch ergibt sich nicht nur eine besonders einfache Ausbildung für die Verfahrbarkeit der Laufwerke, sondern auch für die Ausbildung des Wagenkastens.

Gemäß einem weiteren Merkmal der Erfindung besitzen
die Laufwerke einen Laufwerkrahmen und Räder, deren
Abrollbewegung bei Belastung durch einen auf der Traverse abgestützten Sattelauflieger blockiert ist.
Hierdurch wird ohne eine formschlüssige Festlegung der
Traverse am Eisenbahnwagen erreicht, daß zusätzlich zu
der Festlegung der Räder des Sattelaufliegers am Boden
des Eisenbahnwagens eine gewisse Festlegung auch des
Sattelzapfens über die Traverse erfolgt, die jedoch bei
heftigen Stößen in Fahrzeuglängsrichtung wegen der möglichen Verschiebung der Laufwerke in Längsrichtung des
Eisenbahnwagens eine unzulässig hohe Belastung des Sattelzapfens der Sattelauflieger verhindert.

Die Blockierung der Abrollbewegung der Räder der Laufwerke erfolgt erfindungsgemäß durch Aufliegen des Laufwerkrahmens auf dem Eisenbahnwagen und somit durch eine
kraftschlüssige Arretierung, die durch besonders hohe
Kräfte überwunden werden kann, so daß die in der Fahrwerksfederung der Sattelauflieger mögliche Beweglichkeit nicht durch den Sattelzapfen blockiert wird, wodurch dieser unzulässig hoch belastet würde.

Das Aufliegen des Laufwerkrahmens auf dem Eisenbahnwagen
kann entweder dadurch geschehen, daß die Räder der Laufwerke mit durch Belastung verformbaren Reifen versehen
sind oder daß die Räder mittels Federn am Laufwerkrahmen gelagert sind, die bei einer Belastung durch einen
Sattelauflieger derart zusammengedrückt werden, daß
sich der Laufwerkrahmen auf den Eisenbahnwagen auflegt.

Um ungewollte Bewegungen unbelasteter Traversen, insbesondere bei Bewegungen leerer Eisenbahnwagen zu verhindern, sind die Laufwerke gemäß einem weiteren Merkmal

- 6 -

bei unbelasteter Traverse gegen Abheben vom Eisenbahnwagen und gegen ein Verfahren gesichert. Bei einer bevorzugten Ausführungsform der Erfindung ist zu diesem
Zweck jedes Laufwerk mit mindestens einer verstellbaren
Klaue versehen, die in ihrer einen Endstellung einen
Teil des Eisenbahnwagens mit Abstand untergreift und
die in ihrer anderen Endstellung formschlüssig an diesem Teil des Eisenbahnwagens anliegt. In der erstgenannten Endstellung können somit die Laufwerke mit der
Traverse verschoben werden, sind jedoch gegen Ausheben
gesichert. In der anderen Endstellung der Klaue greift
diese derart an einem Teil des Eisenbahnwagens an, daß
ein Verschieben der unbelasteten Traverse unmöglich
ist.

Bei einer bevorzugten Ausführungsform der Erfindung ist
die Klaue durch einen zweiarmigen Hebel gebildet, dessen
einer Arm mit einem unterhalb des Kopfprofils des Eisenbahnwagens angeordneten Verriegelungsstück versehen und
der über den anderen Arm mittels einer Spindel um einen
waagerechten Lagerbolzen am Laufwerkrahmen verschwenkbar gelagert ist. Hierdurch ergibt sich eine besonders
einfache und leicht zu bedienende Verriegelung für die
Laufwerke unbelasteter Traversen.

Erfindungsgemäß ist die Traverse an jedem Ende mittels
eines senkrechten Tragbolzens verschwenkbar mit dem jeweiligen Laufwerk verbunden und durch Freigabe dieses
Tragbolzens vom Laufwerk entkuppelbar. Diese Ausführung
ermöglicht an jedem Ende der Traverse einerseits eine
einfache Entkupplung vom Laufwerk und andererseits eine
sichere Lagerung zum Verschwenken der Traverse, wenn
diese bei einer Bewegung eines Sattelaufliegers auf dem
Eisenbahnwagen aus dessen Bewegungsbereich herausbewegt

- 7 -

werden soll.

Falls zum Beladen des Eisenbahnwagens mit Sattelaufliegern eine Zugmaschine Verwendung findet, deren den Sattelzapfen des Sattelaufliegers aufnehmende Sattelplatte
mittels einer Hubvorrichtung an der Zugmaschine höhenverstellbar ist, kann gemäß einem weiteren Merkmal der
Erfindung die zur Aufnahme des Sattelzapfens des Sattelaufliegers dienende Sattelplatte von der Traverse entkuppelbar sein. Hierdurch ist es möglich, auf die Längenveränderung der Abstellstützen am Sattelauflieger
beim Absenken und Anheben desselben zu verzichten und
stattdessen die Hubvorrichtung der Zugmaschine einzusetzen. Der Be- und Entladevorgang wird somit weiterhin
vereinfacht.

Wenn zwischen der Traverse und der von dieser entkuppelbaren Sattelplatte gemäß einem weiteren Merkmal eine
Hubvorrichtung, vorzugsweise ein aufblasbares Luftkissen, angeordnet wird, kann auch beim Einsatz normaler
Zugmaschinen mit höhenunveränderlicher Sattelplatte
auf Längenveränderungen der zum Sattelauflieger gehörenden Abstellstützen verzichtet werden, weil das Anheben des Sattelaufliegers zum Verschwenken dessen Abstellstützen durch die an der Traverse angeordnete Hubvorrichtung erfolgen kann. Insbesondere wenn diese als
aufblasbares Luftkissen ausgebildet ist, ergibt sich
eine robuste und einfache Ausbildung, die entweder
durch das Druckluftnetz der Zugmaschine oder des Eisenbahnwagens betätigt werden kann.

In an sich bekannter Weise kann an der Unterseite der
Traverse ein dem Sattelzapfen eines Sattelaufliegers
entsprechender Zapfen angeordnet sein, so daß mittels

- 8 -

einer speziellen Zugmaschine, deren Sattelplatte mit dem an der Unterseite der Traverse angeordneten Zapfen zusammenwirkt, die gesamte, von den Laufwerken entkuppelte Traverse mit dem Sattelauflieger abgenommen werden kann. Auch hierdurch läßt sich eine Vereinfachung des Be- und Entladevorganges durchführen.

Mit der Erfindung wird schließlich vorgeschlagen, die Traverse mit Aufnahmen für die Tragholme eines Gabelstaplers und/oder Aufhängeösen für ein Ladegeschirr zu versehen, so daß die Traverse bei Nichtgebrauch auf einfache Weise vom Eisenbahnwagen abgenommen werden kann.

Jeder Laufwerkrahmen ist schließlich mit seitlich über die Laufläche der Räder hinabreichenden Führungsleisten versehen, die sowohl während des Verfahrens der Laufwerke mittels der Räder als auch bei ausgeschalteter Rollbewegung der Räder eine sichere Führung für die Laufwerke ergeben.

Auf der Zeichnung ist ein Ausführungsbeispiel der erfindungsgemäßen Vorrichtung zur Lagerung des Sattelzapfens von auf Eisenbahnwagen zu transportierenden Sattelaufliegern dargestellt, und zwar zeigen:

Fig. 1    eine schematische Seitenansicht eines Eisenbahnwagens mit der erfindungsgemäßen Vorrichtung während des Beladens mit einem Sattelauflieger,

Fig. 2    eine schematische Draufsicht auf den Eisenbahnwagen gemäß Fig. 1,

Fig. 3    eine Draufsicht auf ein Ausführungsbeispiel

- 9 -

der erfindungsgemäßen Vorrichtung in vergrößertem Maßstab,

Fig. 4    eine Stirnansicht zu der Vorrichtung nach
Fig. 3,

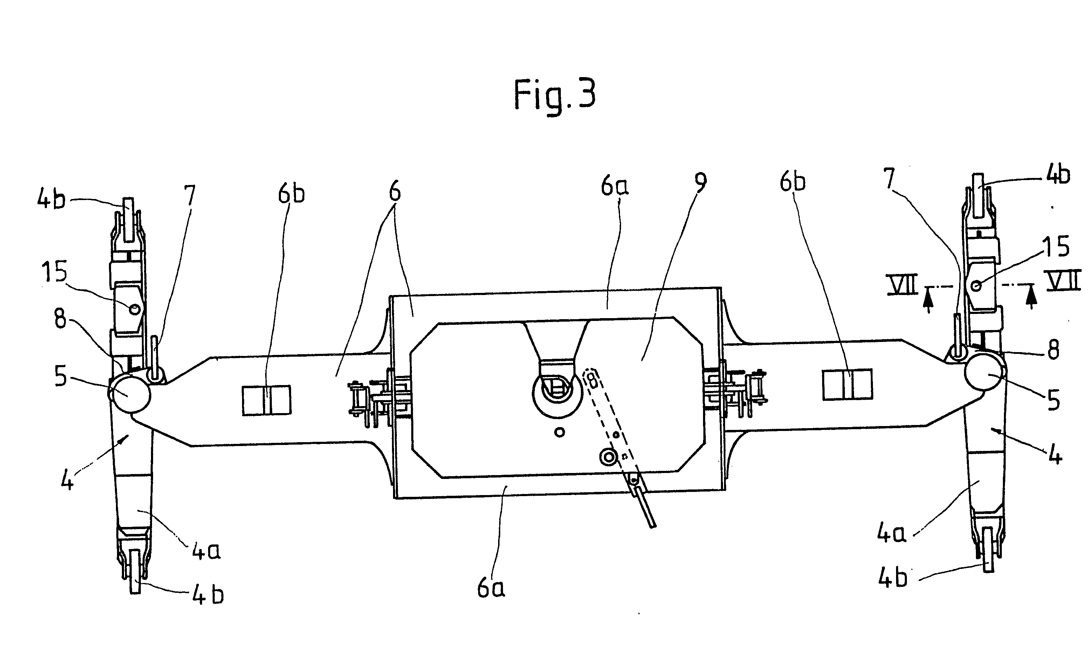

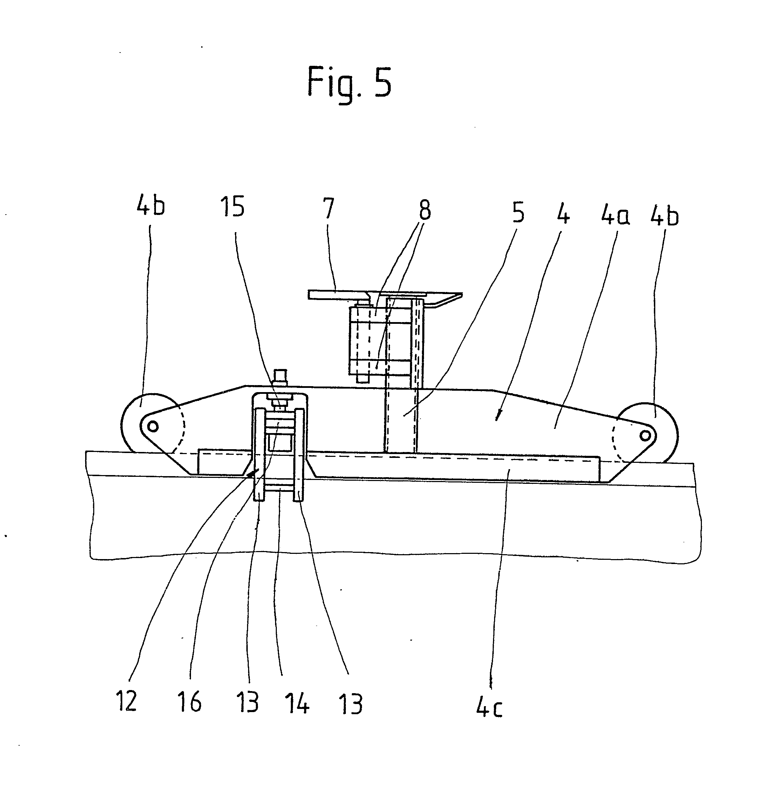

Fig. 5    eine Seitenansicht eines der in den Fig. 3
und 4 dargestellten Laufwerke,

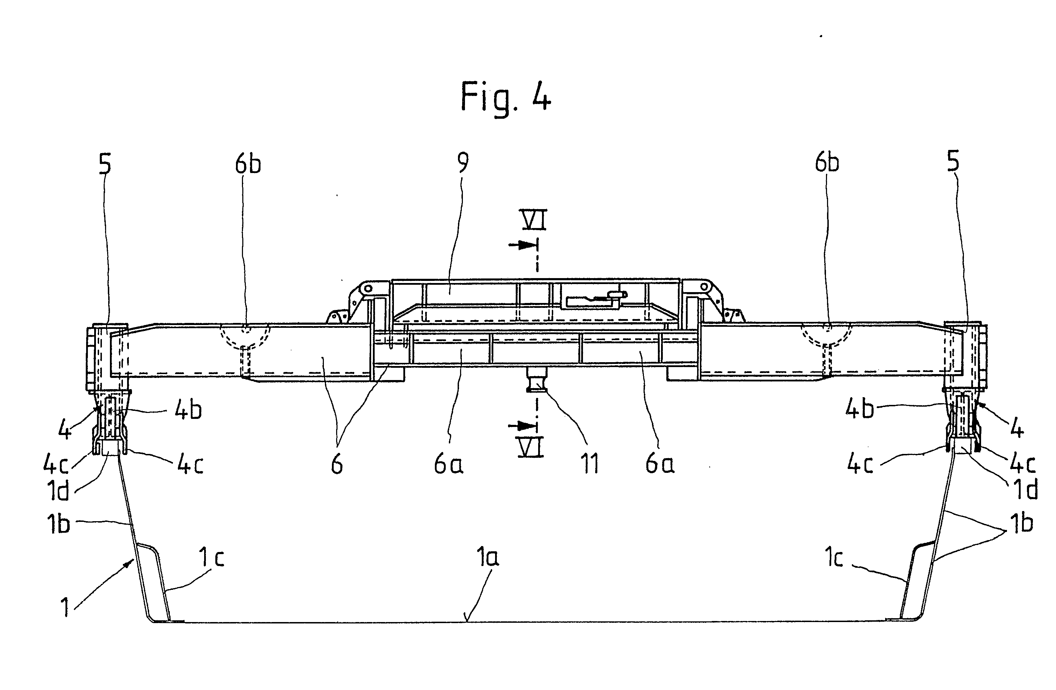

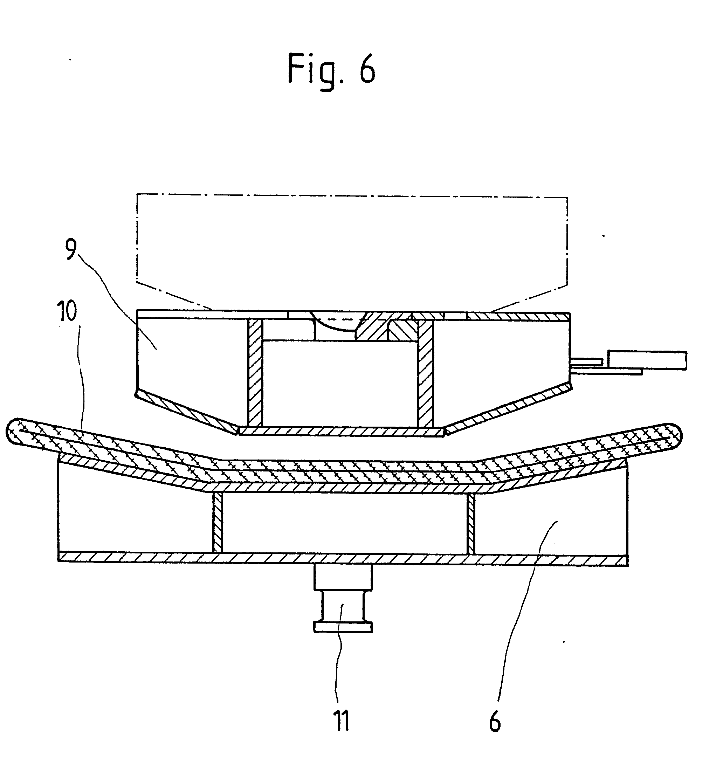

Fig. 6    einen Querschnitt gemäß der Schnittlinie
VI - VI in Fig. 4 und

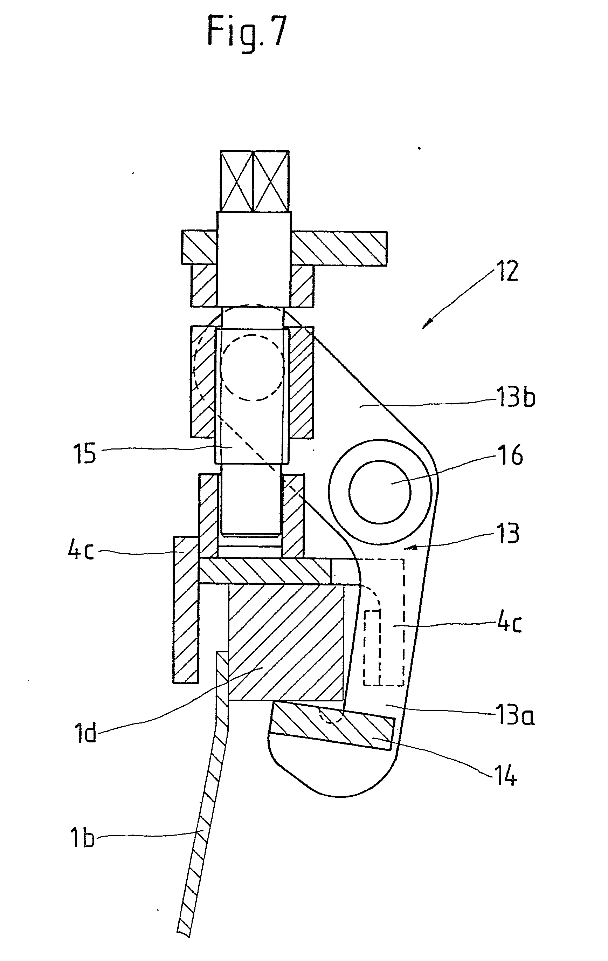

Fig. 7    einen Querschnitt gemäß der Schnittlinie
VII - VII in Fig. 3.

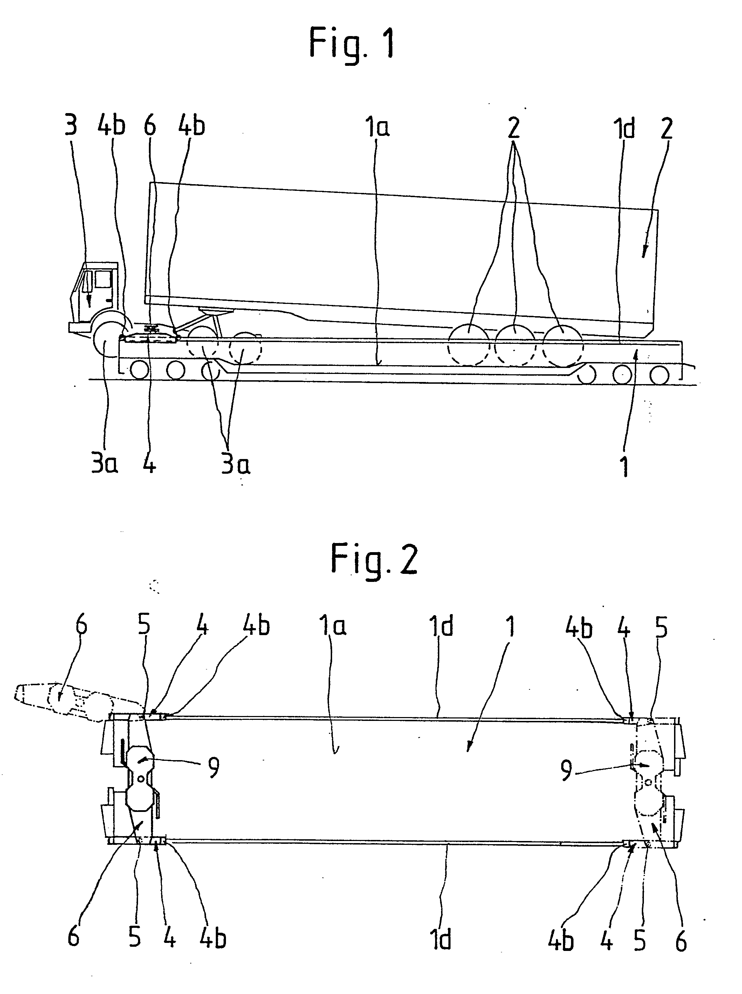

Der in den Figuren 1 und 2 schematisch und in Fig. 4
mit dem Querschnitt seines Wagenkastens dargestellte
Eisenbahnwagen 1 besitzt eine über seine gesamte Länge
durchlaufende Ladefläche 1a für die Räder 2a eines
Sattelaufliegers 2 sowie 3a einer Zugmaschine 3. Wie
insbesondere aus Fig. 4 hervorgeht, ist der Wagenkasten
des Eisenbahnwagens 1 durch Seitenwangen 1b wannenförmig
ausgebildet, wobei diese Seitenwangen 1b zusammen mit
Profilträgern 1c die Seitenlangträger des Wagenkastens
bilden. Am oberen Ende sind die Seitenwangen 1b mit
Kopfprofilen 1d versehen, die eine zusätzliche Verstärkung der Seitenwangen 1b bilden.

Auf diesen Kopfprofilen 1d sind Laufwerke 4 in Längsrichtung des Eisenbahnwagens 1 verfahrbar, wie dies
insbesondere aus den Figuren 1 und 2 hervorgeht. Eine
konkrete Ausführungsform dieser Laufwerke 4 ist in den
Figuren 3 bis 7 dargestellt.

- 10 -

Gemäß dieser Darstellung besteht jedes Laufwerk 4 aus einem Laufwerkrahmen 4a und zwei Rädern 4b. Diese besitzen durch Belastung verformbare Reifen, wie dies insbesondere in Fig. 5 zu erkennen ist. Weiterhin sind am Laufwerkrahmen 4a seitlich über die Lauffläche der Räder 4b hinabreichende Führungsleisten 4c vorgesehen, die eine Führung des Laufwerkrahmens 4a bei einem Verfahren der Laufwerke 4 in Längsrichtung der Kopfprofile 1d bewirken.

An jedem Laufwerk 4 ist in der Mitte ein senkrecht stehender Tragbolzen 5 befestigt, an dem jeweils ein Ende einer Traverse 6 lösbar bzw. verschwenkbar gelagert ist. In Fig. 2 ist die Traverse 6 mit strichpunktierten Linien in der verschwenkten Stellung gezeigt. Das Entkuppeln der Traverse 6 von den Tragbolzen 5 erfolgt durch Entfernen eines Riegelbolzens 7 und Verschwenken von Lagerhalbschalen 8 um eine parallel zur Achse des Tragbolzens 5 verlaufende Schwenkachse, wie dies am besten in den Figuren 3 und 4 zu erkennen ist.

Auf der Oberseite der Traverse 6 ist eine Sattelplatte 9 angeordnet, die zur Aufnahme des Sattelzapfens des Sattelaufliegers 2 dient. Beim dargestellten Ausführungsbeispiel gemäß den Figuren 4 bis 7 ist diese Sattelplatte 9 von der Traverse 6 entkuppelbar. Zwischen Traverse 6 und Sattelplatte 9 ist ein als Hubvorrichtung dienendes, aufblasbares Luftkissen 10 angeordnet, wie insbesondere aus Fig. 6 hervorgeht. Diese Darstellung zeigt ebenso wie die Fig. 4 einen an der Unterseite der Traverse 6 angeordneten Zapfen 11, der dem Sattelzapfen eines Sattelaufliegers 2 entspricht.

Schließlich zeigen die Figuren 4 bis 7, daß an jedem Laufwerk 4 eine verstellbare Klaue 12 angeordnet ist, mittels welcher die Laufwerke 4 bei unbelasteter Traverse 6 gegen Abheben vom Eisenbahnwagen 1 und gegen ein Verschieben in Längsrichtung des Eisenbahnwagens 1 gesichert sind.

Jede Klaue 12 umfaßt gemäß den Figuren 5 und 7 einen zweiarmigen Hebel 13, dessen unterer Arm 13a mit einem Verriegelungsstück 14 versehen ist. Dieses Verriegelungsstück untergreift in der einen Endstellung der Klaue 12 das Kopfprofil 1d des Eisenbahnwagens 1 mit Abstand, liegt jedoch in der anderen Endstellung gemäß Fig. 7 an der Unterseite des Kopfprofils 1d an. In der erstgenannten Stellung wird auf diese Weise das Laufwerk 4 zwar gegen ein senkrecht nach oben gerichtetes Abheben vom Kopfprofil 1d gesichert, jedoch nicht an einer Verfahrbewegung in Längsrichtung des Kopfprofils 1d gehindert. In der anderen, in Fig. 7 gezeichneten Endstellung blockiert jedoch das Verriegelungsstück 14 jegliche Bewegung des Laufwerks 4.

Die Verstellung des zweiarmigen Hebels 13 geschieht über dessen oberen Arm 13b. Dieser ist mit einer Spindelmutter einer nicht steigenden Spindel 15 verbunden. Durch Drehen dieser Spindel 15 erfolgt auf diese Weise ein Verschwenken des zweiarmigen Hebels 13 um einen Lagerbolzen 16, der waagerecht am Laufwerkrahmen 4a angeordnet ist.

Um den in Fig. 1 schematisch dargestellten Sattelauflieger 2 mittels einer Zugmaschine 3 auf den Eisenbahnwagen 1 auffahren zu können, wird die in die Nähe ihrer späteren Position verfahrene Traverse 6 gemäß den strichpunktierten Linien im linken Teil der Fig. 2 von einem Laufwerk 4 entkuppelt und seitlich derart verschwenkt, daß sie außerhalb des Bewegungsbereiches des Sattelzuges liegt. In der endgültigen Position des Sattelaufliegers 2 auf dem Eisenbahnwagen 1, die in Fig. 1 eingezeichnet ist, werden die nicht gezeichneten Abstellstützen des Sattelaufliegers 2 aus ihrer waagerechten Lage in eine senkrechte Lage verschwenkt und in ihrer Länge derart verändert, daß der Sattelzapfen des Sattelaufliegers 2 aus der Sattelplatte der Zugmaschine 3 nach oben herausgehoben wird. Die Zugmaschine 3 kann nunmehr den Eisenbahnwagen 1 verlassen, da der Sattelauflieger 2 durch seine Abstellstützen getragen wird. Nunmehr wird die Traverse 6 aus der ausgeschwenkten Stellung in die mit ausgezogenen Linien in Fig. 2 dargestellte Stellung zurückgeschwenkt und mit dem zweiten Laufwerk 4 verbunden, bevor der Sattelzapfen des Sattelaufliegers 2 durch Verkürzen seiner Abstellstützen in die Sattelplatte 9 der Traverse 6 abgesenkt und mit dieser verriegelt wird. Durch weiteres Verkürzen der Abstellstützen des Sattelaufliegers 2 können diese aus der senkrechten Stellung in die waagerechte Stellung verschwenkt und am Sattelauflieger 2 verriegelt werden.

Durch die Belastung der Traverse 6 durch den Sattelauflieger 2 werden die Reifen der Räder 4b der Laufwerke 4 derart verformt, daß sich gemäß Fig. 5 der Laufwerkrahmen 4a auf das Kopfprofil 1d an den Seitenwangen 1b des Eisenbahnwagens 1 auflegt. Hierdurch erfolgt nicht nur eine Blockierung der Abrollbewegung der Räder 4b, sondern eine kraftschlüssige Festlegung der Laufwerke 4 am Eisenbahnwagen 1, die zusätzlich zu einer Festlegung der Räder 2a des Sattelaufliegers 2 durch Radvorleger eine sichere Positionierung auch des vorderen Endes des Sattelaufliegers 2 am Eisenbahnwagen 1 bewirkt. Diese Festlegung ist jedoch nicht formschlüssig, so daß sie insbesondere bei heftigen Stößen in Längsrichtung sowohl des Eisenbahnwagens 1 als auch des Sattelaufliegers 2 eine Bewegung der Laufwerke 4 gegenüber den Kopfprofilen 1d gestattet und damit Überbeanspruchungen des Sattelzapfens des Sattelaufliegers 2 verhindert.

Ein Abheben des Sattelaufliegers 2 von der Traverse 6 und Aufnehmen des Sattelaufliegers 2 durch eine Zugmaschine 3 zum Entladen des Eisenbahnwagens 1 erfolgt in umgekehrter Reihenfolge.

Falls eine Zugmaschine 3 mit einer Hubvorrichtung zum Anheben der zugmaschineneigenen Sattelplatte versehen ist, kann auf den Einsatz der zum Sattelauflieger 2 gehörenden Abstellstützen verzichtet werden. Kommt eine Spezialzugmaschine zum Einsatz, die den Sattelauflieger 2 zusammen mit einer Traverse 6 be- und entlädt, kann die Traverse 6 von beiden Laufwerken 4 entkuppelt werden. In diesem Falle greift die Sattelplatte der Zugmaschine an dem Zapfen 11 an, der auf der Unterseite der Traverse 6 angeordnet ist.

Schließlich kann die Längenveränderung der zum Sattelauflieger 2 gehörenden Abstellstützen unterbleiben, wenn das zwischen Traverse 6 und Sattelplatte 9 angeordnete Luftkissen 10 mittels Druckluft entweder vom Eisenbahnwagen 1 oder von der Zugmaschine 3 aufgeblasen wird. In diesem Fall können die Abstellstützen des Sattelaufliegers 2 bei gegenüber der Traverse 6 angehobener Sattelplatte 9 in die senkrechte Lage verschwenkt bzw. aus der senkrechten Lage zurückgeschwenkt werden, wobei das Absenken der Sattelplatte 9 auf die Traverse 6 durch Ablassen der Luft aus dem Luftkissen 10 erfolgt. Nach der

- 14 -

Verriegelung der Sattelplatte 9 mit der Traverse 6 und der sich hierdurch ergebenden Absenkung des Laufwerkrahmens 4a auf das Kopfprofil 1d befindet sich der Sattelauflieger 2 sodann in der zum Verfahren des Eisenbahnwagens 1 erforderlichen Position.

Selbstverständlich stellt die in den Figuren 4 bis 7 dargestellte Konstruktion nur eine mögliche Ausführungsform dar. So ist es beispielsweise möglich, die Absenkung des Laufwerkrahmens 4a auf das Kopfprofil 1d nicht durch verformbare Reifen der Räder 4b, sondern durch Federn zu erzielen, die zwischen den Rädern 4b und dem Laufwerkrahmen 4a angeordnet sind.

Um bei Bedarf die Traverse 6 auch mittels eines Gabelstaplers von den Laufwerken 4 abheben bzw. auf die Laufwerke 4 aufsetzen zu können, ist die Traverse 6 mit Aufnahmen 6a für die Tragholme eines Gabelstaplers versehen. Schließlich besitzt die Traverse 6 Aufhängeösen 6b, so daß auch ein übliches Krangeschirr zum Anheben und Absenken verwendet werden kann.

0042942

- 15 -

Bezugsziffernliste :

| | |
|---|---|
| 1 | Eisenbahnwagen |
| 1a | Ladefläche |
| 1b | Seitenwange |
| 1c | Profilträger |
| 1d | Kopfprofil |
| 2 | Sattelauflieger |
| 2a | Rad |
| 3 | Zugmaschine |
| 3a | Rad |
| 4 | Laufwerk |
| 4a | Laufwerkrahmen |
| 4b | Rad |
| 4c | Führungsleiste |
| 5 | Tragbolzen |
| 6 | Traverse |
| 6a | Aufnahme |
| 6b | Aufhängeöse |
| 7 | Riegelbolzen |
| 8 | Lagerhalbschale |
| 9 | Sattelplatte |
| 10 | Luftkissen |
| 11 | Zapfen |
| 12 | Klaue |
| 13 | zweiarmiger Hebel |
| 13a | Arm |
| 13b | Arm |
| 14 | Verriegelungsstück |
| 15 | Spindel |
| 16 | Lagerbolzen |

- 16 -

Patentansprüche :

1. Vorrichtung zur Lagerung des Sattelzapfens von auf Eisenbahnwagen zu transportierenden Sattelaufliegern mit einer Traverse, die sich mit ihren Enden im Bereich der Seitenlangträger auf dem Eisenbahnwagen abstützt und in ihrer Mitte eine Sattelplatte zur Aufnahme des Sattelzapfens des Sattelaufliegers aufweist, d a d u r c h   g e k e n n z e i c h n e t , daß die Traverse (6) an ihren beiden Enden jeweils entkuppelbar und verschwenkbar mit einem Laufwerk (4) verbunden ist, das in Längsrichtung des Eisenbahnwagens (1) verfahrbar ist.

2. Vorrichtung nach Anspruch 1, dadurch gekennzeichnet, daß die Laufwerke (4) auf Kopfprofilen (1d) der Seitenwangen (1b) des wannenförmig ausgebildeten und mit einer durchgehenden Ladefläche (1c) für die Räder (2a, 3a) von Sattelaufliegern (2) und Zugmaschinen (3) versehenen Wagenkasten verfahrbar sind.

3. Vorrichtung nach Anspruch 1 oder 2, dadurch gekennzeichnet, daß die Laufwerke (4) einen Laufwerkrahmen (4a) und Räder (4b) besitzen, deren Abrollbewegung bei Belastung durch einen auf der Traverse (6) abgestützten Sattelauflieger (2) blockiert ist.

4. Vorrichtung nach Anspruch 3, dadurch gekennzeichnet, daß die Abrollbewegung der Räder (4b) der Laufwerke (4) durch Aufliegen des Laufwerkrahmens (4a) auf dem Eisenbahnwagen (Kopfprofil 1d) blockiert ist.

5. Vorrichtung nach Anspruch 4, dadurch gekennzeichnet, daß die Räder (4b) mit durch Belastung verformbaren Reifen versehen sind.

6. Vorrichtung nach Anspruch 4, dadurch gekennzeichnet, daß die Räder (4b) mittels Federn am Laufwerkrahmen (4a) gelagert sind.

7. Vorrichtung nach mindestens einem der Ansprüche 1 bis 6, dadurch gekennzeichnet, daß die Laufwerke (4) bei unbelasteter Traverse (6) gegen Abheben vom Eisenbahnwagen (1) und gegen ein Verfahren gesichert sind.

8. Vorrichtung nach Anspruch 7, dadurch gekennzeichnet, daß jedes Laufwerk (4) mit mindestens einer verstellbaren Klaue (12) versehen ist, die in ihrer einen Endstellung einen Teil des Eisenbahnwagens (1) mit Abstand untergreift und die in ihrer anderen Endstellung formschlüssig an diesem Teil des Eisenbahnwagens (1) anliegt.

9. Vorrichtung nach Anspruch 2 und 8, dadurch gekennzeichnet, daß die Klaue (12) durch einen zweiarmigen Hebel (13) gebildet ist, dessen einer Arm (13a) mit einem unterhalb des Kopfprofils (1d) des Eisenbahnwagens (1) angeordneten Verriegelungsstück (14) versehen und der über den anderen Arm (13b) mittels einer Spindel (15) um einen waagerechten Lagerbolzen (16) am Laufwerkrahmen (4a) verschwenkbar gelagert ist.

10. Vorrichtung nach mindestens einem der Ansprüche 1 bis 9, dadurch gekennzeichnet, daß die Traverse (6) an jedem Ende mittels eines senkrechten Tragbolzens (5) verschwenkbar mit dem jeweiligen Laufwerk (4) verbunden und durch Freigabe dieses Tragbolzens (5) vom Laufwerk (4) entkuppelbar ist.

11. Vorrichtung nach mindestens einem der Ansprüche 1 bis 10, dadurch gekennzeichnet, daß die zur Aufnahme des Sattelzapfens des Sattelaufliegers (2) dienende Sattelplatte (9) von der Traverse (6) entkuppelbar ist.

12. Vorrichtung nach Anspruch 11, dadurch gekennzeichnet, daß zwischen der Traverse (6) und der Sattelplatte (9) eine Hubvorrichtung (10) angeordnet ist.

13. Vorrichtung nach Anspruch 12, dadurch gekennzeichnet, daß die Hubvorrichtung als aufblasbares Luftkissen (10) ausgebildet ist.

14. Vorrichtung nach mindestens einem der Ansprüche 1 bis 13, dadurch gekennzeichnet, daß an der Unterseite der Traverse (6) in an sich bekannter Weise ein dem Sattelzapfen eines Sattelaufliegers (2) entsprechender Zapfen (11) angeordnet ist.

15. Vorrichtung nach mindestens einem der Ansprüche 1 bis 14, dadurch gekennzeichnet, daß die Traverse (6) mit Aufnahmen (6a) für die Tragholme eines Gabelstaplers und/oder Aufhängeösen (6b) versehen ist.

16. Vorrichtung nach mindestens einem der Ansprüche 1 bis 15, dadurch gekennzeichnet, daß der Laufwerkrahmen (4a) mit seitlich über die Lauffläche der Räder (4b) hinabreichenden Führungsleisten (4c) versehen ist.

W/ro

# Fig. 1

# Fig. 2

# Fig.3

0042942

# Fig. 4

# Fig. 5

# Fig. 6

9

10

11

6

0042942

# Fig.7

Europäisches
Patentamt

**EUROPÄISCHER RECHERCHENBERICHT**

0042942

Nummer der Anmeldung

EP 81 10 3559

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A - 1 530 299 (RHEINSTAHL SIEGENER EISENBAHNBEDARF) <br><br> * Seite 2, Absatz 2; Seite 4, Zeilen 5-26, Mitte; Figuren 16, 34 * <br><br> -- <br><br> US - A - 2 967 492 (KEENER) <br><br> * Spalte 1, Zeile 52 - Spalte 2, Zeile 2; Spalte 2, Zeile 46 - Spalte 5, Zeile 2; Figuren 1-8 * <br><br> -- <br><br> EP - A - 0 005 517 (KOMBIVERKEHR DEUTSCHE GESELLSCHAFT FUR KOMBINIERTEN GUTERVERKEHR) <br><br> * Seite 9, Absatz 1; Figur 7 * <br><br> -- | 1-3,7- 9,11, 12. <br><br><br><br><br><br> 1 <br><br><br><br><br><br><br><br> 11,14 |
| A | DE - A - 1 455 321 (WAGGONFABRIK TALBOT) | |
| A | FR - A - 1 549 544 (C.I.M.T.) | |
| A | US - A - 3 396 926 (SHETTON et al.) | |
| A | US - A - 3 370 550 (GUTRIDGE et al.) | |

---- 

### KLASSIFIKATION DER ANMELDUNG (Int. Cl.³)

B 61 D 3/16
B 62 D 53/08
B 60 P 7/10

### RECHERCHIERTE SACHGEBIETE (Int. Cl.³)

B 61 D
B 62 D
B 60 P

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 14-09-1981 | GROTZINGER |